# EUROPEAN PATENT SPECIFICATION

(11) **EP 0 447 988 B1**
(45) Date of publication and mention of the grant of the patent: **09.10.1996**
(21) Application number: 91104044.2
(22) Date of filing: 15.03.1991
(51) Int. Cl.: B32B 27/08, B65D 65/40

(54) **Multilayer thermosealing film for packaging**
Heisssiegelbare Mehrschichtfolie für Verpackungszwecke
Feuille multicouche thermosoudable pour l'emballage

(30) Priority: 23.03.1990 IT 1978290; 05.09.1990 IT 2138590
(43) Date of publication of application: 25.09.1991
(73) Proprietor: W.R. Grace & Co.-Conn., New York, New York 10036 (US)
(72) Inventor: Parnell, Colin Douglas, I-21038 Cellina di Leggiuno (Varese) (IT); Fornasiero, Tito, I-20017 Rho (Milan) (IT); Forloni, Roberto, I-20014 Garbatola di Nerviano (Milan) (IT)
(74) Representative: Modiano, Guido, Dr.-Ing.

(56) References cited:
- EP-A- 0 001 898
- EP-A- 0 224 862
- FR-A- 2 445 212
- US-A- 4 228 215
- US-A- 4 351 931
- US-A- 4 678 836
- US-A- 4 755 402
- US-A- 4 820 557

## Description

This invention relates to the field of multilayer films for packaging, and more specifically to such films which are thermosealing, whether heat-shrinkable or not, as well as to container structures made from such films and to packages, particularly for food items, using such films and containers.

The use of multilayer films for packaging items in general, and foods in particular, is widespread nowedays. Depending on the performance to be achieved, the films comprise various plastic layers which, according to their chemical composition and the consequent properties, do perform the required function.

For the packaging of food items, the multilayer films usually comprise gas barrier layers for maintaining the package under vacuum or controlled atmosphere, structural layers which confer upon the films abuse and handling resistance, thermosealing layers for the cases when the hermetic sealing of the package is required, and possible bonding or adhesive layers interposed between the other layers for improving the cohesion of the multilayer film.

As thermosealing layers various polymeric materials have been used heretofore, amongst which the most widely used have been, for example, ethylene-vinyl acetate (EVA) copolymers, various ethylene polymers such as very low density linear polyethylene (VLDPE), or ionomeric copolymers such as those available under the trademark Surlyn from E.I. Du Pont de Nemours and Inc. Co., (USA). These latter ionomeric polymers generally consist of copolymers of ethylene and methacrylic acid which are ionically cross-linked so as to convert them into metal salts, just designated as ionomers.

Notwithstanding the fact that such polymers used heretofore as thermosealing layers gave sufficiently satisfactory performance, they still had disadvantages which limited their use in certain applications. In particular, none of these polymers showed a sufficiently broad spectrum of properties comprising both a good sealability in the presence of contamination and of creases or folds in the sealing area as well as a good seal strength together with a wide sealing range in terms of temperature or time. From US 3,365,520 (DuPont), US 4,399,181 (Asahi-Dow) or US 4,414,053 (Gulf) films are known which comprise blends of ethylene-methacrylic acid (EMAA) with Surlyn, ethylene methyl acrylate (EMA) or other polymers, for use in forming oriented multilayer films. None of these prior patents discloses however an improved thermosealing layer as that which forms the subject-matter of this invention.

U.S. Patent 4,879,124 discloses a cook-in perforated, gas permeable bag made of a multilayer film comprising a sealing layer and an additional layer of an EVA-LLDPE, blend. The sealing layer, while generically hinted to as possibly comprising a polymer selected from EAA, EMAA and ionomers, is stated to be preferably made of a blend of 85% LLDPE with 15% ionomer or of such a blend in a 80/20 proportion.

According to this prior reference a bag is formed by providing a transverse sealing on a seamless perforated tubing length, then the bag is loaded with a food item, is closed by clipping or folding, is cooked and then it is finally placed in an additional, vacuum bag. Thus the sealing layer mentioned in this prior reference does not perform as a vacuum closure seal of a gas impermeable bag.

Known from EP-0001898 is a heat-sealable, biaxially oriented, coextruded thermoplastic film laminate comprising a core layer and at least one surface layer, the surface layer comprising polyethylene and copolymers of ethylene with olefinically unsaturated comonomers having an ethylene content of at least 80%, such as copolymers of ethylene with alpha-beta-monoethylenically unsaturated carboxylic acids, including acrylic and methacrylic acids.

From US-4,755,402 is known a thermoplastic multi-layer heat-shrinkable film comprising a barrier layer of polyvinylidene chloride copolymer and an outer layer of polyamide, wherein the polyamide layer is directly adhered to the barrier layer without the use of an intermediate adhesive layer.

US-4,820,557 discloses a thermoplastic, multilayer, heat-shrinkable packaging film comprising an outside polymer layer, a heat sealing layer, an interior layer between the sealing layer and the outside layers, and a barrier layer, wherein the interior layer comprises a linear copolymer of ethylene and an alpha-olefin.

The main object of this invention is to provide a multilayer film comprising at least a thermosealing film and a gas barrier layer having an optimum combination of properties such as to render it suitable for use in packaging of various articles in various packaging and handling conditions.

More particularly, the object of this invention is to provide a multilayer film incorporating a gas barrier layer and a thermosealing layer having a good sealability in the presence of contamination or folds in the sealing area, an improved cold and hot seal strength, and a wide sealing range in terms of temperatures and times.

A further object of the invention is to provide packaging structures, like bags, etc. from the multilayer films of the invention, which are suitable both for cold packaging and for cooking-in the packaged food items.

These and other objects which will appear more clearly from the following disclosure are achieved by a multilayer thermoplastic film as defined in claim 1

This invention is based on the discovery that an EMAA copolymer as defined above gives rise to a film for use as thermosealing layer, particularly in multilayer films, which has an excellent combination of properties.

Preferably, the thermosealing layer according to this invention comprises the said EMAA copolymer with a MAA content of 9 to 15% by weight, e.g. of 12% by weight. According to further embodiments of the invention the thermosealing layer comprises a blend of 50 to 99% by weight of the EMAA copolymer as defined above, with 50 to 1% by weight of at least a further ethylene polymer or copolymer selected from linear low density polyethylene (LLDPE), linear very low density polyethylene (VLDPE), ethylene copolymers such as EBA (ethylene-butyl acrylate), EMA (ethylene-methyl acrylate), EVA (ethylene-vinyl acetate), and EVA modified with functional groups.
The multilayer film according to this invention comprises as said at least one additional polymeric layer a structural layer conferring upon the film mechanical or abuse resistance. Preferably the multilayer film of the invention comprises thus at least the following layers:

### Sealing/ Barrier/ Structural

The gas barrier layer can be made of materials conventionally used for such purpose, for example of copolymers of vinylidene chloride with vinyl chloride or methyl acrylate or both, ethylene-vinyl alcohol (EVOH) copolymers, for example having an ethylene content of 30 to 47%, polyamides or copolyamides or blends thereof or with EVOH.

The structural layer which, beyond conferring abuse resistance, also increases the heat-shrink percentage when heat-shrinkable films are prepared, can be selected from polyethylenes of very low density (VLDPE), high density (HDPE), or linear low density (LLDPE); ethylene copolymers with vinyl or acrylic comonomers such as ethylene-vinyl acetate (EVA), ethylene-butyl acrylate (EBA), ethylene-methyl acrylate (EMA), ethylene-methacrylic acid (EMAA), ethylene-acrylic acid (EAA); ionomers; olefinic polymers and copolymers such as EVA, polyethylene (PE) or polypropylene (PP) modified with functional groups; polyamides such as Nylon 6, Nylon 6-66, Nylon 6-12, or Nylon 6-69; polyesters, copolyesters; and mixtures thereof.

As an ionomeric polymer Surlyn, for example, can be used.

Amongst the ethylene copolymers a preferred copolymer is EVA having a VA content of from 2 to 30% by weight, preferably of from 6 to 12% by weight.

Amongst the possible blends of the above polymers for producing the structural layer, blends of VLDPE and EVA in a weight ratio of 70:30 to 20:80 can be mentioned.

The multilayer film of the invention can comprise, in addition to the above-mentioned layers, further layers, such as adhesive layers, which improve the adhesion between the various functional layers. A structure of this type can comprise the following layers:

### Sealing/ Adhesive/ Barrier/ Adhesive/ Structural

As adhesive layers, those commonly known for such use can be employed, e.g. EVA copolymers or PE or PP polymers modified with functional groups; linear low density polyethylene (LLDPE) or linear very low density polyethylene (VLDPE); copolymers selected from EVA, EBA, EMA, EMAA, EAA; ionomers; and mixtures thereof. The EVA copolymers useful as adhesive have a VA content ranging from 6 to 25% by weight.

Preferably at least the thermosealing layer of a multilayer film according to the invention is cross-linked by electron beam irradiation at 1 to 15 MR. It has been found that such treatment notably increases the overall resistance of the obtainable seal, whether cold or hot.

According to a specific embodiment of this invention, the whole multilayer film can be irradiated to achieve cross-linking. In this case, the film can be prepared by simultaneous extrusion of all the layers, for example in tubular form, and their subsequent irradiation treatment.

According to an alternative embodiment, the multilayer film of the invention is produced by first coextruding a substrate comprising the EMAA thermosealing layer and possible further layers, in particular structural layers, then cross-linking the substrate by irradiation, and finally coextruding on the cross-linked substrate a coating comprising the further layers of the final film.

According to a still further embodiment of the invention, the multilayer film can be prepared by laminating various preformed films according to the desired structure, by using intermediate adhesive layers. The above mentioned adhesive materials can be used for this purpose. Also, in this embodiment part of the laminate or the whole laminate can be subjected to irradiation treatment.

Since for packaging food products it is advantageous to have heat-shrinkable films, the multilayer film of the invention is made heat-shrinkable by orientation through at least a mono-axial stretching in the longitudinal or transverse direction with respect to the direction of extrusion, but preferably through biaxial stretching, using techniques well-known in the field. For example, in the case when the film is prepared by coextrusion in tubular form, the bi-axial stretching can be performed by the "air-bubble" blowing method, on-line or off-line of the extrusion process. The multilayer film of this invention, either irradiated or not, has a thickness that depends on the number of layers, for example from 15 to 200 microns, preferably from 40 to 150 microns.

The following examples show, only for illustrative and not limitative purposes, various structures of multilayer films according to this invention.

### Examples 1 to 10

The following films were prepared in accordance with this invention, each irradiated and non-irradiated version.
1. EMAA/ PVDC/ EMAA
2. EMAA/ PVDC/ EVA
3. EMAA/ PVDC/ 30 EVA + 70 LLDPE
4. EMAA/ EVOH/ EMAA
5. EMAA/ EVA/PVDC/ EVA
6. EMAA/ Adhesive 1/ PVDC/ Adhesive 1/ EMAA
7. EMAA/ EVA/ Adhesive 1/ PVDC/ VLDPE/ EVA
8. EMAA/ Adhesive 1/ PVDC/ Adhesive 1/ EVA
9. EMAA/ EVA/ Adhesive 1/ PVDC/ Adhesive 1/ Surlyn
10. EMAA/ EVA/ Adhesive 2/ EVOH/ Adhesive 2/ EVA

The film of Ex. 10 which does not contain a PVDC layer has been prepared by simultaneously extruding all the layers and irradiating then the entire coextrudate. It turned out to be suitable for cooking the packaged food product right in the package. Thus, this film has been used for packaging ham, and the so obtained package, after removal of air therefrom and its closure by sealing together two portions of the EMAA layer facing each other, has been cooked at 70-80°C whereby obtaining cooked ham.

### Examples 11-12

The following film structures have been further prepared according to the invention, each in an irradiated and non-irradiated version.
11. EMAA/ EVA/ LLDPE/ EVA/ PVDC/ Adhesive 2/ Ny 6/12
12. EMAA/ D/ Adhesive 2/ EVOH/ Adhesive 2/ D
In the above examples 1 to 12 the abbreviations mean:
- EMAA: contains 12% MAA
- EVA: contains 9% VA
- EVOH: contains 44% ethylene
- Adhesive 1: is an EVA copolymer containing 18% VA
- Adhesive 2: is an EVA copolymer modified by functional groups, available under the trademark Bynel from DuPont
- Surlyn: is an ionomeric EMAA containing Na or Zn ions
- B: is a blend of 70/30 LLDPE/ EVA
- C: is a blend of 30/70 LLDPE/ EVA
- D: is a blend of 20/80 LLDPE/ EVA

### Example 13

In order to evaluate the performance of a multilayer film according to this invention comparative tests have been run relating to the seal strength of such a film with respect to that of a conventional multilayer film which does not have an EMAA thermosealing layer.

The film of the invention had the following structure:
- 4-ply: EMAA/ EVA// PVDC/ EVA
wherein the EMAA/EVA substrate has been cross-linked by irradiation, then extrusion coated with the remaining layers, and finally biaxially oriented. The EMAA sealing layer had an MAA content of 12%, while the EVA layer had a VA content of 9%.

The control film according to the prior art had the following structure:
- 4-ply: Surlyn/ EVA// PVDC/ EVA
wherein the Surlyn/EVA substrate had also been irradiated and then extrusion coated with the remaining layers.

The seal strength tests were run by measuring the burst resistance at room temperature (18-20°C), and in hot by immersing the seal in a water bath at 85°C. The results are given in the following table:

**Table 1**

| Film | Seal strength at room temp. (inches water) | Hot seal strength (mbar) |
|---|---|---|
| Ex. 13 | 190 | 95 |
| Control | 148 | 86 |

From the above results it can be seen that the film according to the invention had a seal strength at room temperature which was notably improved, while the seal strength in hot was maintained at a level at least as good as that of the control film having a Surlyn thermosealing layer.

The multilayer films of the invention showed superior properties also with respect to other conventional materials used heretofore as thermosealing layers. Thus, they turned out to be superior to EVA copolymers as far as thermosealing in the presence of contamination is concerned, as for example that existing in the presence of meat products. Furthermore, the films of the invention showed themselves to be superior to VLDPE or LLDPE both with respect to sealability through folds and to the sealing range in terms of time and temperature: for example the films of this invention started to seal about 1/2 seconds before or at a temperature 10-20°C below those used for VLDPE sealing layers.
The following example shows some comparative tests with respect to films having a LLDPE thermosealing layer.

### Example 14

The film according to Ex.11 has been tested for seal strength and sealing range in comparison with a control film of the following structure:
- Control:: LLDPE/ EVA/ SURLYN/ EVA/ PVDC/ Adhesive 2/ Nylon 6-12
More specifically the sealing range and the seal strength have been determined both under clean conditions and in the presence of grease contamination at the sealing area, and the results are given in Figs. 1 and 2 of the enclosed drawings. Moreover, the quality of the seal made through folds has been evaluated by determining the reject percentage in vacuum packaging tests, wherein the packages which failed to maintain internal vacuum because of poor seals have been discarded. These latter results are plotted in the graph of Fig. 3.

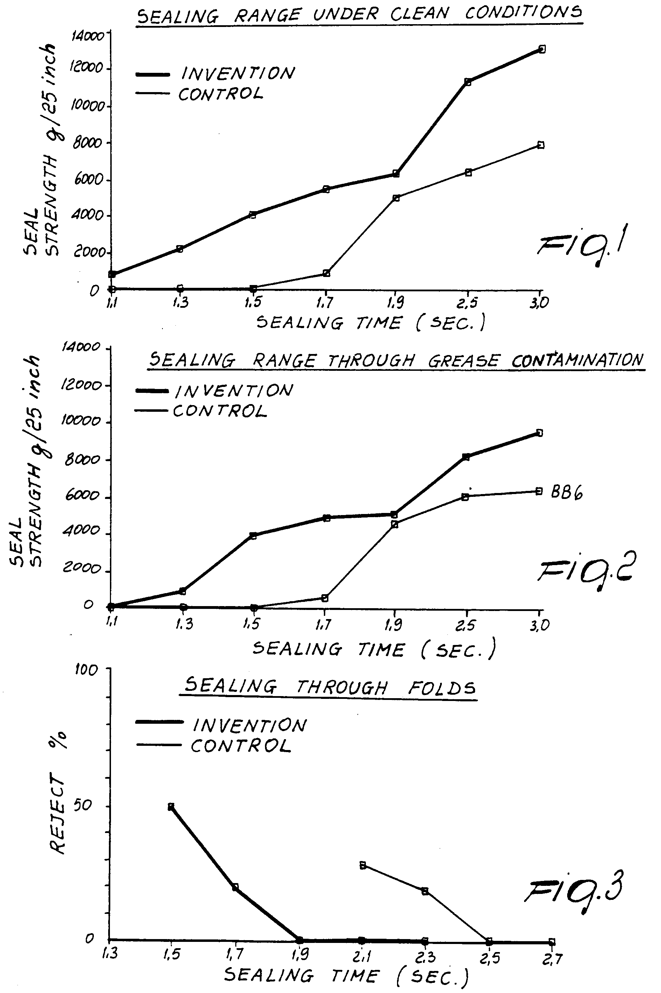

From Figs. 1 and 2 it can be seen that the film of this invention starts to seal and achieves acceptable seal strength before the control film, a fact which translates in practice into energy savings and shortened production cycles.

From Fig. 3 it can also be noted that the reject percentage drops to zero for the film of this invention in much shorter times than for the control film, allowing thus for the same advantages of time and energy savings as mentioned above.

In addition to the multilayer films disclosed above, this invention also relates to containing structures formed therefrom, such as bags having a bottom seal or two lateral seals, formed at adjacent facing portions of the EMAA based thermosealing layer.

Where technical features mentioned in any claim are followed by reference signs, those reference signs have been included for the sole purpose of increasing the intelligibility of the claims and accordingly, such reference signs do not have any limiting affect on the scope of each element identified by way of example by such reference signs.

## Claims

1. A heat-shrinkable multilayer thermoplastic film from which containers may be made, said film having:
(a) a thermosealing layer,
(b) a gas barrier layer selected from copolymers of vinylidene chloride with vinyl chloride or methyl acrylate or mixtures of the two, ethylene-vinyl alcohol (EVOH) copolymers, polyamides or copolyamides or blends thereof with each other or with EVOH,
(c) at least one polymeric layer constituting a structural layer selected from ethylene copolymers of very low density (VLDPE), high density (HDPE), or linear low density (LLDPE), ethylene copolymers with vinyl or acrylic comonomers, ionomers, olefinic polymers and copolymers modified with functional groups, polyamides, polyesters, copolyesters, and blends thereof, and
(d) optionally at least one adhesive layer located between said layers (a), (b) and (c), said adhesive layer being selected from EVA copolymers or PE or PP polymers modified with functional groups, linear low density polyethylene or linear very low density polyethylene, copolymers selected from EVA, EBA, EMA, EMAA, EAA, ionomers and their mixtures,
characterized in that said thermosealing layer comprises at least 50% by weight of an ethylene-methacrylic acid (EMAA) copolymer with a methacrylic acid (MAA) content of 4% to 18% by weight, thereby allowing the thermosealing layer to be sealed to itself through comtaminants left by a product loaded in a container made from said multilayer film.

2. A film according to claim 1 wherein said thermosealing layer comprises EMAA copolymer having an MAA content of 9 to 15% by weight.

3. A multilayer film according to claim 1 wherein the thermosealing layer consists essentially of EMAA copolymer having an MAA content of 4 to 18%.

4. The multilayer film of claim 1 wherein the thermosealing layer consists essentially of EMAA copolymer having a MAA content of 9 to 15%.

5. A film according to claim 1 wherein said thermosealing layer comprises a blend of 50 to 99% of said EMAA copolymer with 50 to 1% of at least one further ethylene polymer or copolymer selected from ethylene-butyl acrylate (EBA), ethylene-methyl acrylate (EMA), VLDPE, LLDPE, ethylene-vinyl acetate (EVA) and EVA modified with functional groups.

6. A film according to Claim 1 wherein said at least one adhesive layer consists essentially of EVA copolymers having a VA content of from 6 to 25% by weight.

7. A film according to Claim 1 wherein said at least one adhesive layer consists essentially of an EVA copolymer modified by functional groups.

8. A film according to claim 1 wherein said structural layer consists essentially of ethylene copolymers with vinyl or acrylic comonomers selected from ethylene-vinyl acetate (EVA), ethylene-butyl acrylate (EBA), ethylene-methyl acrylate (EMA), ethylene-methacrylic acid (EMAA), ethylene-acrylic acid (EAA).

9. A film according to claim 1 wherein said structural layer consists essentially of modified olefinic polymers and copolymers selected from EVA, polyethylene and polypropylene modified with functional groups.

10. A film according to Claim 1 wherein said structural layer consists essentially of polyamides selected from Nylon 6, Nylon 6-66, Nylon 6-12 and Nylon 6-69.

11. A film according to claim 1 wherein said structural layer is selected from EVA copolymers with a VA content of 2 to 30%, VLDPE polymers, and blends of VLDPE and EVA in weight ratios of 70:30 to 20:80.

12. A film according to Claim 1 comprising layers of:
EMAA/EVA/PVDC/EVA

13. A film according to Claim 1 comprising layers of:
EMAA/EVA/LLDPE/EVA/PVDC/Adhesive/POLYAMIDE

14. A film according to any one of the preceding claims wherein at least the thermosealing layer has been cross-linked by irradiation.

15. Containing structure for packaging made of a multilayer film according to any one of claims 1 to 15 which is sealed together at two portions of said thermosealing layer arranged adjacent and facing each other.

16. Structure according to claim 15 in the form of a bag having a bottom seal.

17. Structure according to claim 15 in the form of a bag having two lateral seals.

## Patentansprüche

1. Heißschrumpfbare thermoplastische Mehrschichtfolie, aus der Behälter hergestellt werden können, wobei die Folie
(a) eine Thermosiegelschicht,
(b) eine Gassperrschicht ausgewählt aus Copolymeren von Vinylidenchlorid mit Vinylchlorid oder Methylacrylat oder Mischungen der beiden, Ethylen/Vinylalkohol(EVOH)-Copolymeren, Polyamiden oder Copolyamiden oder Gemischen derselben miteinander oder mit EVOH,
(c) mindestens eine polymere Schicht, die eine strukturelle Schicht ausgewählt aus Ethylencopolymeren sehr niedriger Dichte (VLDPE), Ethylencopolymeren hoher Dichte (HDPE) oder linearen Ethylencopolymeren niederer Dichte (LLDPE), Ethylencopolymeren mit Vinyl- oder Acrylcomonomeren, Ionomeren, olefinischen Polymeren und Copolymeren, die mit funktionellen Gruppen modifiziert sind, Polyamiden, Polyestern, Copolyestern und Gemischen derselben und
(d) gegebenenfalls mindestens eine Klebstoffschicht angeordnet zwischen den Schichten (a), (b) und (c) umfaßt, wobei die Klebstoffschicht ausgewählt ist aus EVA-Copolymeren oder PE- oder PP-Polymeren, die mit funktionellen Gruppen modifiziert sind, linearem Polyethylen niedriger Dichte oder linearem Polyethylen sehr niedriger Dichte, Copolymeren ausgewählt aus EVA, EBA, EMA, EMAA, EAA, Ionomeren und deren Mischungen,
dadurch gekennzeichnet, daß
die Thermosiegelschicht mindestens 50 Gew.-% Ethylen/Methacrylsäure(EMAA)-Copolymer mit einem Methacrylsäure(MAA)gehalt von 4 Gew.-% bis 18 Gew.-% umfaßt, wodurch die Thermosiegelschicht mit sich selbst durch Verunreinigungen versiegelt werden kann, die durch ein Produkt hinterlasssen wurden, das in einen aus dieser Mehrschichtfolie hergestellten Behälter eingeführt wurde.

2. Folie nach Anspruch 1, bei der die Thermosiegelschicht EMAA-Copolymer mit einem MAA-Gehalt von 9 bis 15 Gew.-% umfaßt.

3. Mehrschichtfolie nach Anspruch 1, bei der die Thermosiegelschicht im wesentlichen aus EMMA-Copolymer mit einem MAA-Gehalt von 4 bis 18 % besteht.

4. Mehrschichtfolie nach Anspruch 1, bei der die Thermosiegelschicht im wesentlichen aus EMMA-Copolymer mit einem MAA-Gehalt von 9 bis 15 % besteht.

5. Folie nach Anspruch 1, bei der die Thermosiegelschicht ein Gemisch auf 50 bis 99 % des EMMA-Copolymers mit 50 bis 1 % von mindestens einem weiteren Ethylenpolymer oder -copolymer ausgewählt aus Ethylen/Butylacrylat (EBA), Ethylen/Methylacrylat (EMA), VLDPE, LLDPE, Ethylen/Vinylacetat (EVA) und mit funktionellen Gruppen modifiziertem EVA umfaßt.

6. Folie nach Anspruch 1, bei der die mindestens eine Klebstoffschicht im wesentlichen aus EVA-Copolymeren mit einem VA-Gehalt von 6 bis 25 Gew.-% besteht.

7. Folie nach Anspruch 1, bei der die mindestens eine Klebstoffschicht im wesentlichen aus EVA-Copolymer besteht, das mit funktionellen Gruppen modifiziert ist.

8. Folie nach Anspruch 1, bei der die strukturelle Schicht im wesentlichen aus Ethylencopolymeren mit Vinyl- oder Acrylcomonomeren ausgewählt aus Ethylen/Vinylacetat (EVA), Ethylen/Butylacrylat (EBA), Ethylen/Methylacrylat (EMA), Ethylen/Methacrylsäure (EMMA), Ethylen/Acrylsäure (EAA) besteht.

9. Folie nach Anspruch 1, bei der die strukturelle Schicht im wesentlichen aus modifizierten olefinischen Polymeren und Copolymeren ausgewählt aus EVA, Polyethylen und Polypropylen modifiziert mit funktionellen Gruppen besteht.

10. Folie nach Anspruch 1, bei der die strukturelle Schicht im wesentlichen aus Polyamiden ausgewählt aus Nylon 6, Nylon 6-66, Nylon 6-12 und Nylon 6-69 besteht.

11. Folie nach Anspruch 1, bei der die strukturelle Schicht ausgewählt ist aus EVA-Copolymeren mit einem VA-Gehalt von 2 bis 30 %, VLDPE-Polymeren und Gemischen aus VLDPE und EVA in Gewichtsverhältnissen von 70 : 30 bis 20 : 80.

12. Folie nach Anspruch 1, die Schichten aus
EMMA/EVA/PVDC/EVA
umfaßt.

13. Folie nach Anspruch 1, die Schichten aus
EMAA/EVA/LLDPE/EVA/PVDC/Klebstoff/POLYAMID
umfaßt.

14. Folie nach einem der vorhergehenden Ansprüche, bei der zumindest die Thermosiegelschicht durch Bestrahlung vernetzt worden ist.

15. Behälterstruktur für Verpackungen hergestellt aus einer Mehrschichtfolie gemäß einem der Ansprüche 1 bis 14, welche an zwei Bereichen der Thermosiegelschicht, die angrenzen aneinander und einander gegenüber angeordnet sind, zusammengesiegelt ist.

16. Struktur nach Anspruch 15 in Form eines Beutels mit einer Bodenversiegelung.

17. Struktur nach Anspruch 15 in Form eines Beutels mit zwei seitlichen Versiegelungen.

## Revendications

1. Film thermoplastique multicouches rétrécissable à la chaleur à partir duquel des récipients peuvent être fabriqués, ledit film ayant :
(a) une couche à thermoscellement,
(b) une couche barrière de gaz choisie parmi les copolymères de chlorure de vinylidène avec du chlorure de vinyle ou du méthyl acrylate ou des mélanges des deux, les copolymères d'éthylène-alcool vinylique (EVOH), les polyamides ou copolyamides ou mélanges de ceux-ci l'un avec l'autre ou avec EVOH,
(c) au moins une couche polymérique constituant une couche structurelle choisie parmi des copolymères d'éthylène très basse densité (VLDPE), haute densité (HDPE) ou linéaire basse densité (LLDPE), des copolymères d'éthylène avec des comonomères vinyle ou acrylique, des ionomères, des polymères oléfiniques et des copolymères modifiés avec des groupes fonctionnels, des polyamides, des polyesters, des copolyesters, et des mélanges de ceux-ci, et
(d) optionnellement au moins une couche d'adhésif située entre lesdites couches (a), (b) et (c), ladite couche d'adhésif étant choisie parmi les copolymères EVA ou les polymères PE ou PP modifiés avec des groupes fonctionnels, le polyéthylène linéaire basse densité ou le polyéthylène linéaire très basse densité, les copolymères choisis parmi EVA, EBA, EMA, EMAA, EAA, les ionomères et leurs mélanges,
caractérisé en ce que ladite couche à thermoscellement comprend au moins 50% en poids d'un copolymère d'éthylène-acide méthacrylique (EMAA) avec une teneur en acide méthacrylique (MAA) de 4 % à 18 % en poids, permettant ainsi à la couche à thermoscellement d'être scellée à elle-même par des contaminants laissés par un produit chargé dans un récipient fait à partir du film multicouches.

2. Film selon la revendication 1 dans lequel ladite couche à thermoscellement comprend un copolymère EMAA ayant une teneur en MAA de 9 à 15 % en poids.

3. Film multicouche selon la revendication 1 dans lequel la couche à thermoscellement consiste essentiellement d'un copolymère EMAA ayant une teneur en MAA de 4 à 18 %.

4. Film multicouches selon la revendication 1 dans lequel la couche à thermoscellement consiste essentiellement d'un copolymère EMAA ayant une teneur en MAA de 9 à 15 %.

5. Film selon la revendication 1 dans lequel ladite couche à thermoscellement comprend un mélange de 50 à 99 % dudit copolymère EMAA avec 50 à 1 % d'au moins un polymère d'éthylène supplémentaire ou d'un copolymère choisi parmi l'éthylène-butyl acrylate (EBA), l'éthylène-méthyl acrylate (EMA), VLDPE, LLDPE, l'éthylène-acétate de vinyle (EVA) et EVA modifié avec des groupes fonctionnels.

6. Film selon la revendication 1 dans lequel ladite au moins une couche d'adhésif consiste essentiellement de copolymères d'EVA ayant une teneur en VA de 6 à 25 % en poids.

7. Film selon la revendication 1 dans lequel ladite au moins une couche d'adhésif consiste essentiellement d'un copolymère EVA modifié par des groupes fonctionnels.

8. Film selon la revendication 1 dans lequel ladite couche structurelle consiste essentiellement de copolymères d'éthylène avec des comonomères vinyliques ou acryliques choisis parmi l'éthylène-acétate de vinyle (EVA), l'éthylène-butyl acrylate (EBA), l'éthylène-méthyl acrylate (EMA), l'éthylène-acide méthylacrylique (EMAA), l'éthylène-acide acrylique (EAA).

9. Film selon la revendication 1 dans lequel ladite couche structurelle consiste essentiellement de polymères oléfiniques modifiés et de copolymères choisis parmi EVA, le polyéthylène et le polypropylène modifiés avec des groupes fonctionnels.

10. Film selon la revendication 1 dans lequel ladite couche structurelle consiste essentiellement de polyamides choisis parmi le Nylon 6, Nylon 6-66, le Nylon 6-12 et le Nylon 6-69.

11. Film selon la revendication 1 dans lequel ladite couche structurelle est choisie parmi les copolymères EVA avec une teneur en VA de 2 à 30 %, les polymères VLDPE et les mélanges de VLDPE et EVA en des rapports en poids de 70 :30 à 20 : 80.

12. Film selon la revendication 1 comprenant des couches de :
EMAA/EVA/PVDC/EVA.

13. Film selon la revendication 1 comprenant des couches de :
EMAA/EVA/LLDPE/EVA/PVDC/Adhésif/POLYAMIDE

14. Film selon l'une quelconque des revendications précédentes dans lequel au moins la couche à thermoscellement a été réticulée par irradiation.

15. Structure contenante pour emballage faite d'un film multicouches selon l'une quelconque des revendications 1 à 15 qui est scellée ensemble aux deux portions de ladite couche à thermoscellement situées adjacentes et se faisant face l'une à l'autre.

16. Structure selon la revendication 15 sous la forme d'un sac ayant un joint de fond.

17. Structure selon la revendication 15 sous la forme d'un sac ayant deux joints latéraux.
